# FASCICULE DE BREVET EUROPEEN

(11) **EP 2 417 657 B1**
(45) Date de publication et mention de la délivrance du brevet: **05.06.2013**
(21) Numéro de dépôt: 10723205.0
(22) Date de dépôt: 06.04.2010
(51) Int. Cl.: H01M 4/62, H01M 4/66, H01M 4/04, H01M 4/48, H01M 4/58, H01M 4/131, H01M 4/1391, H01M 4/136, H01M 4/1397

(54) **ELECTRODE COMPOSITE**
VERBUNDELEKTRODE
COMPOSITE ELECTRODE

(30) Priorité: 06.04.2009 FR 0901664
(43) Date de publication de la demande: 15.02.2012
(73) Titulaire: Centre National de la Recherche Scientifique, 75016 Paris (FR)
(72) Inventeur: LESTRIEZ, Bernard, F-44000 Nantes (FR); GUYOMARD, Dominique, F-44880 Sautron (FR); GAUBICHER, Joël, F-44000 Nantes (FR)
(74) Mandataire: Goulard, Sophie
(86) Numéro de dépôt international: PCT/FR2010/050654
(87) Numéro de publication internationale: WO 2010/116083

(56) Documents cités:
- WO-A1-2008/136361
- WO-A2-2005/090486
- WO-A2-2006/120332
- US-A1- 2008 062 616

## Description

La présente invention concerne les électrodes constituées par un collecteur de courant qui porte un matériau composite comprenant des particules de matière active et des particules d'un matériau conducteur électronique.

Il est connu d'utiliser, dans les générateurs électrochimiques, notamment des les batteries rechargeables au lithium, des électrodes constituées par un matériau composite déposé sur un collecteur de courant, ledit matériau composite étant constitué par une matière active et par un matériau générant une conduction électronique. La matière active est utilisée sous forme de particules, et elle peut être par exemple un oxyde de métal de transition à structure spinelle, un oxyde de métal de transition à structure lamellaire; un oxyde à charpente polyanionique ou un oxyde à base de vanadium. Des exemples classiques sont les oxydes de formule LiMPO₄ dans laquelle M représente au moins un élément choisi parmi Mn, Fe, Co et Ni, en particulier LiFePO₄. Le matériau générant une conductivité électronique est généralement du carbone, sous forme de poudre de noir de carbone, de poudre de graphite, de fibres de carbone ou de nanofibres de carbone.

Le document WO 2005/090486 décrit un procédé de préparation d'une électrode composite comprenant un mélange de particules de matière active MA et de particules d'un matériau CE générant une conductivité électronique, ledit mélange étant supporté par un conducteur électrique formant un collecteur de courant CC, ledit procédé comprenant une étape consistant à modifier les particules CE pour qu'elles puissent réagir avec les particules MA pour former des liaisons covalentes et/ou ioniques.

Le but de la présente invention est d'améliorer les performances de ces électrodes, en améliorant le contact d'une part entre les particules, et d'autre part entre les particules et le collecteur de courant.

En conséquence, la présente invention a pour objet un procédé de préparation d'une électrode composite comprenant un mélange de particules de matière active MA et de particules d'un matériau CE générant une conductivité électronique, ledit mélange étant supporté par un conducteur électrique formant un collecteur de courant CC. Ledit procédé est caractérisé en ce qu'il consiste à modifier les particules MA et les particules CE pour qu'elles puissent réagir entre elles et avec le matériau du collecteur pour former des liaisons covalentes, et de manière à former des liaisons électrostatiques d'une part entre lesdites particules et d'autre part entre lesdites particules et le collecteur de courant.

Le procédé de la présente invention peut être mis en oeuvre pour l'élaboration d'une électrode dans laquelle :
- la matière active est choisie parmi les composés décrits dans l'art antérieur comme matière active d'électrode, en particulier les oxydes (notamment les titanates de lithium et les oxydes qui en dérivent par remplacement partiel de Li ou de Ti), les phosphates (notamment les phosphates de lithium et d'au moins un métal de transition choisi de préférence parmi Fe, Mn et Co) et les borates (notamment les borates de Li et d'au moins un métal de transition choisi de préférence parmi Fe, Mn et Co) ;
- le matériau CE générant une conductivité électronique est un noir de carbone, un graphite, un nanotube de carbone ou de la fibre de carbone, ou un de leurs mélanges ;
- le collecteur de courant est un matériau métallique, par exemple un acier inoxydable ou un métal choisi parmi l'aluminium, l'inox, le cuivre, le nickel, ledit matériau métallique pouvant éventuellement être modifié par une couche de carbone, de nitrure de métal de transition ou de polymère conducteur. Le collecteur peut être sous forme d'une plaque non poreuse ou d'une plaque poreuse. Une plaque poreuse peut être sous forme d'une grille ou de plusieurs grilles entremêlées.

Dans un mode de réalisation particulier, les particules de MA, les particules de CE et le collecteur de courant (globalement désignés ci-après par "substrats" sont modifiés à l'aide de réactifs (désignés ci-après de manière générale par T-X-L) qui permettent la formation d'une liaison covalente d'une part entre les particules et d'autre part entre les particules et le collecteur de courant, et à l'aide de réactifs, désignés de manière générale par T-X-Q, qui permettent de contrôler la charge.

Dans les réactifs T-X-L et T-X-Q :
- un groupe T est un groupe fonctionnel capable de réagir avec l'un des éléments MA, CE ou CC pour former une liaison covalente ;
- un groupe X est un groupe espaceur conjugué, c'est à dire un groupe qui comprend un système d'atomes liés par une liaison covalente avec au moins une liaison π délocalisée ;
- un groupe L est un groupe fonctionnel capable de réagir avec un autre groupe fonctionnel L pour former une liaison covalente ;
- un groupe Q est un groupe chargé, qui peut éventuellement être formé in situ.

Le groupe espaceur X peut être par exemple un groupe divalent constitué par au moins un groupe choisi parmi les groupes phénylène, oligophénylène, oligophénylènevinylène, oligophénylèneéthynylène, oligothiophène, et azo benzène.

Le groupe T d'un réactif T-X-L ou T-X-Q dépend de la nature chimique du substrat qui doit être modifié.

T peut être un groupe PO₃H₂, COOH ou SO₃H lorsque le substrat à modifier est un oxyde, un phosphate ou un borate classiquement utilisés comme matière active MA. Dans ce cas, la réaction peut être effectuée dans un mélange de méthanol et de toluène (1/1) et elle est terminée en moins d'une heure.

T peut être un cation diazonium, lorsque le substrat à modifier est du carbone formant le matériau CE, ou une matière active MA sous forme de particules au moins partiellement enrobées par du carbone, ou un matériau métallique (par exemple un acier inox, Cu ou Ni) formant le collecteur de courant. Le contre ion peut être par exemple un anion BF₄ ou Cl⁻. Un réactif T-X-L ou T-X-Q dans lequel T est un cation diazonium peut être produit in situ à partir d'un composé NH₂-X-L ou NH₂-X-Q dans l'acétonitrile ACN par addition de tBu-NO₂, ou dans un milieu à pH ≤1 par addition de NaNO₂. La réaction d'un substrat avec un réactif dans lequel T est un cation diazonium est avantageusement effectuée par voie électrochimique dans une cellule à trois électrodes à un potentiel inférieur à 0 V vs SCE dans laquelle l'électrolyte est une solution désaérée NBu₄BF₄ 0,1 M dans ACN ou dans l'eau à pH≤2, ladite solution contenant en outre 0,1 mM de sel de diazonium. Pour modifier un collecteur de courant en acier inoxydable ou en aluminium à l'aide d'un réactif ayant un groupe diazonium, la voie électrochimique est indispensable.

Les groupes fonctionnels L sont des groupes capables de réagir entre eux pour former une liaison covalente. Lorsque le matériau MA, le matériau CE et le collecteur de courant CC ont été modifiés par réaction avec les groupes T de réactifs T-X-L, la réaction entre les divers groupes L permet de lier des particules de MA entre elles, des particules de CE entre elles, des particules de MA avec des particules de CE, ainsi que des particules de MA ou de CE avec le collecteur de courant CC.

Comme premier exemple de couple de groupes fonctionnels L, on peut citer un groupe azido et un groupe acétylène qui permettent la réaction de Huisgen selon l'un des schémas réactionnels suivants: 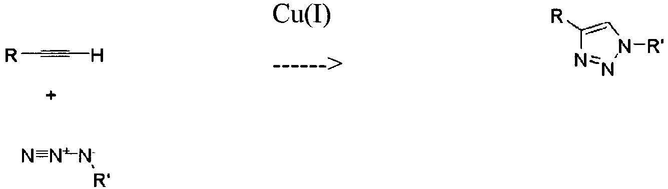 Ou

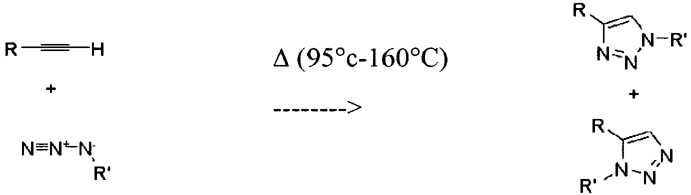

Dans ce schéma, R représente sub1-X1-L1 et R' représente sub2-X2-L2, sub1 et sub2 représentant chacun l'un des substrats MA, CE ou CC, après modification par réaction respectivement avec les réactifs T1-X1-L2 et T2-X2-L2, T1 et T2, X1 et X2, L1 et L2 étant respectivement l'un des groupes T, X et L définis ci-dessus. L'un seul des substrats sub1 et sub2 peut être le collecteur de courant.

La réaction peut être effectuée soit en présence d'un composé de Cu(I) en tant que catalyseur, soit par simple chauffage à une température entre 95 et 160°C.

La réaction de Huisgen permet par conséquent de lier par liaison covalente un élément MA, CE ou CC modifié par greffage d'un groupe azido avec un élément identique ou différent modifié par greffage d'un groupe acétylène.

Comme deuxième exemple de couple de groupes fonctionnels L, on peut citer un groupe NH₂ et un groupe COOH qui réagissent ensemble pour former un groupe amide, selon le schéma réactionnel suivant :

sub1-X1-NH₂ + sub2-X2-COOH → sub1-X1-NH-CO-X2-sub2

Un groupe Q est un groupe chargé, qui peut éventuellement se former in situ. Par exemple, un groupe Q peut être un groupe à charge négative COO⁻, un groupe HPO₃⁻, un groupe PO₃²⁻ ou un groupe SO₃⁻ lesdits groupes à charge négative se formant dans l'eau à partir d'un substrat modifié, respectivement sub-X-COOH, sub-X-PO₃H₂ et sub-X-SO₃H. Un groupe Q peut aussi être un groupe à charge positive NH₃⁺, ledit groupe à charge positive se formant dans l'eau à partir d'un substrat modifié sub-X-NH₂.

Il est noté que certaines fonctions chimiques peuvent agir en tant que groupe T, groupe L ou groupe Q, selon le substrat (MA, CE ou CC) auquel ils sont associés. De ce fait, certaines molécules de réactifs peuvent jouer à la fois le rôle de "modificateur de charge de surface" d'un élément et le rôle d'élément de liaison entre des particules. Quelques exemples de réactifs sont donnés ci-dessous, à titre d'illustration.

Un composé répondant à la formule 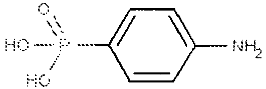 peut être utilisé :
- comme réactif TXL pour modifier une matière active MA du type oxyde, phosphate ou borate, à l'aide de groupe phosphoré (groupe T), le groupe NH₂ pouvant ensuite servir pour une réaction d'amidation en vue de lier les particules de MA avec d'autres particules portant des groupes COOH ;
- comme réactif TXQ pour modifier une matière active MA du type oxyde, phosphate ou borate, à l'aide de groupe phosphoré (groupe T), le groupe NH₂ étant un groupe précurseur d'un groupe chargé NH₃⁺.

Un composé répondant à l'une des formules 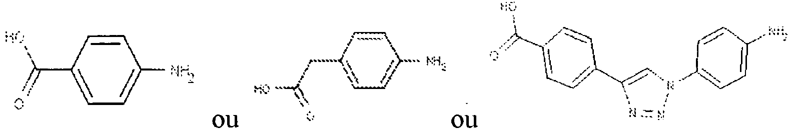 peut être utilisé :
- comme réactif TXL pour modifier une matière active MA du type oxyde, phosphate ou borate, à l'aide de groupe COOH (groupe T), le groupe NH₂ pouvant ensuite servir pour une réaction d'amidation en vue de lier les particules de MA avec d'autres particules portant des groupes COOH ;
- comme réactif TXQ pour modifier une matière active MA du type oxyde, phosphate ou borate, à l'aide de groupe COOH (groupe T), le groupe NH₂ étant un groupe précurseur d'un groupe chargé NH₃⁺ ;
- comme réactif TXL pour modifier un substrat de carbone, un substrat comprenant un enrobage de carbone ou un substrat métallique à l'aide du groupe diazonium (groupe T) obtenu in situ à partir du groupe NH₂, le groupe COOH (groupe L) permettant ensuite de lier le substrat modifié à un autre substrat portant des groupes amine

Un composé répondant à la formule 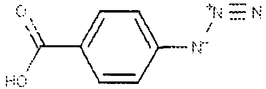 peut être utilisé comme réactif TXL pour modifier un oxyde, un phosphate ou un borate à l'aide du groupe COOH (groupe T), le groupe azido N₃ jouant ensuite le rôle de groupe L permettant une réaction de Huisgen avec un substrat modifié portant un groupe acétylène.

Un composé répondant à la formule 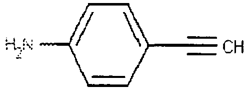 peut être utilisé comme réactif TXL pour modifier un substrat de carbone, un substrat comprenant un enrobage de carbone ou un substrat métallique à l'aide du groupe diazonium (groupe T) obtenu in situ à partir du groupe NH₂, le groupe -C≡CH (groupe L) permettant ensuite de lier le substrat modifié à un autre substrat portant des groupes azido par la réaction de Huisgen.

Un composé répondant à la formule 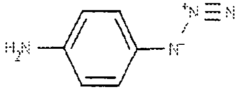 peut être utilisé comme réactif TXL pour modifier un substrat de carbone, un substrat comprenant un enrobage de carbone ou un substrat métallique à l'aide du groupe diazonium (groupe T) obtenu in situ à partir du groupe NH₂, le groupe azido N₃ (groupe L) permettant ensuite de lier le substrat modifié à un autre substrat portant des groupes acétylène par la réaction de Huisgen.

Un composé répondant à la formule 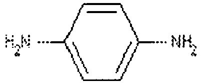
- peut être utilisé comme réactif TXL pour modifier un substrat de carbone, un substrat comprenant un enrobage de carbone ou un substrat métallique à l'aide du groupe diazonium (groupe T) obtenu in situ à partir de l'un des deux groupes NH₂, le groupe NH₂ pouvant ensuite servir pour une réaction d'amidation en vue de lier les particules avec d'autres particules portant des groupes COOH ;
- peut être utilisé comme réactif TXQ pour modifier un substrat de carbone, un substrat comprenant un enrobage de carbone ou un substrat métallique à l'aide du groupe diazonium (groupe T) obtenu in situ à partir de l'un des deux groupes NH₂. Le groupe NH₂ restant étant un groupe précurseur d'un groupe chargé NH₃⁺ (groupe Q), et il permet de modifier la charge de surface.

Plus précisément, le procédé de préparation d'une électrode selon l'invention comprend les étapes suivantes :
a) modification des particules de MA à l'aide d'au moins un réactif T1-X1-L1 et d'un réactif T1'-X1'-Q1 ;
b) modification des particules de CE à l'aide d'au moins un réactif T2-X2-L2 et d'un réactif T2'-X2'-Q2 ;
c) modification du collecteur de courant à l'aide de réactifs T3-X3-L3 et T3'-X3'-Q3
d) mélange des particules MA modifiées et des particules CE modifiées et mise en contact avec le collecteur de courant modifié ;
e) application des conditions permettant la réaction entre les divers groupes L ; étant entendu que les groupes L1, L2 et L3 sont choisis de sorte à pouvoir réagir entre eux.

Lors de l'étape c) visant à modifier le collecteur de courant, les deux faces du substrat conducteur formant le collecteur de courant sont modifiées pour l'élaboration d'une électrode biface. Pour l'élaboration d'une électrode monoface, soit on protège l'une des faces du substrat pendant la modification, soit on modifie les deux faces et l'on supprime la couche superficielle de l'une des faces modifiées, par exemple par abrasion.

Pour lier des particules d'un même substrat entre elles, lesdites doivent porter deux groupes L différents capables de réagir entre eux. Pour lier entre elles des particules de MA et des particules de CE, les particules de MA doivent porter des groupes L1 capables de réagir avec des groupes L2 des particules de CE. De même, pour lier au collecteur des particules de MA ou des particules de CE, le collecteur doit porter des groupes L3 capables de réagir respectivement avec des groupes L2 ou des groupes L3. Lorsque des particules ont été modifiées par deux réactifs TXL portant des groupes L différents (l'un permettant une réaction de Huisgen et l'autre une réaction d'amidation), la liaison entre les particules peut se faire par les deux voies, simultanément ou non.

L'ordre dans lequel les étapes a), b), et c) sont effectuées est sans importance.

L'étape e) peut être effectuée en une ou plusieurs étapes, avant ou après la mise en contact du mélange de particules MA modifiées et de particules de CE modifiées avec le collecteur de courant.

Dans un premier mode de réalisation particulier, dit "procédé par auto-assemblage", le procédé peut être mis en oeuvre en introduisant dans un milieu liquide support le collecteur de courant modifié selon l'étape c), les particules de MA modifiées selon l'étape a), les particules de CE modifiées selon l'étape b), puis en appliquant les conditions requises pour la réaction entre les différents groupes L1, L2 et L3. L'application des conditions requises peut comprendre l'addition des réactifs appropriés (notamment un catalyseur) ou un simple chauffage, suivant la réactivité des groupes L1, L2 ou L3.

Dans un deuxième mode de réalisation, on prépare un mélange de particules de MA modifiées et de particules de CE modifiées, on prépare un collecteur de courant modifié, on dépose le mélange de particules modifiées sur le collecteur de courant modifié, puis on applique, comme dans le premier mode opératoire, les conditions requises pour la réaction entre les différents groupes L1, L2 et L3.

Dans un troisième mode de réalisation :
- on prépare un collecteur de courant modifié portant des groupes L3 ;
- on prépare des particules modifiées MA portant un groupe L1 ;
- on prépare des particules modifiées CE portant des groupes L2 et L2' capables de réagir entre eux et dont l'un peut réagir avec L 1 ;
- on mélange les particules modifiées et on applique les conditions requises pour la réaction entre les différents groupes L1, L2 et L2' ce qui permet au particules de MA et de CE de s'auto assembler.
- on dépose le matériau résultant de la réaction entre les différents groupes L1, L2 et L2' sur le collecteur de courant modifié et on applique les conditions permettant la réaction des groupes L3 avec les groupes L1, L2 et L2' restés libres.

La présente invention est illustrée par l'exemple suivant, auquel elle n'est cependant pas limitée.

### Exemple

On a préparé une électrode composite comprenant de l'oxyde de titane comme matière active MA, un mélange de fibre de carbone et de nanotubes de carbone comme matériau CE et un collecteur de courant en inox, selon le troisième mode de réalisation décrit précédemment.

MA est constitué de particules de TiO₂ anatase (Φ≈20 nm).

CE est constitué par un mélange de nanotubes de carbone et de fibres de carbone dans les proportions massiques 1 pour 1.

### Préparation de particules de CE modifiées

A 25 ml d'eau ultra pure et 5 ml HCl (35%), on a ajouté 40 mg de particules de CE, puis 50 mg d'acide 4-amino-phényl acétique et 25 mg de NaNO₂, et on a laissé réagir à 4°C sous ultra sons pendant 4 h. Après filtration et 3 lavages sous ultra sons à l'eau ultra pure, puis à l'alcool, on a obtenu des particules de carbone portant des groupes -Ph-CH₂-COOH chimisorbés.

### Préparation de particules de MA modifiées

On a dispersé 50 mg de particules de TiO₂ dans un mélange méthanol/toluène 1/1, puis on a ajouté 3,5 g d'acide 4-amino-phényle. Après 30 minutes, on a centrifugé le matériau et lavé 3 fois à l'éthanol et on a obtenu des particules de TiO₂ portant des groupes COO-CH₂-Ph-NH₂ chimisorbés, le groupe COO complexant la surface de TiO₂.

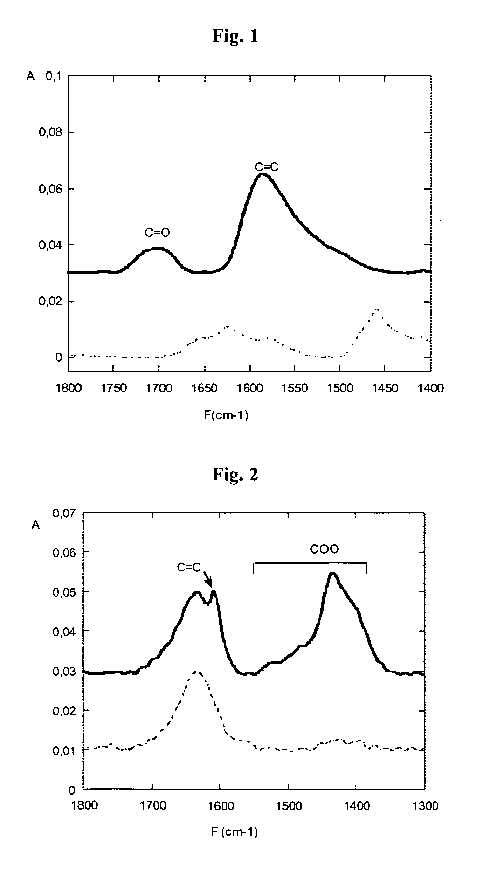

Les particules CE modifiées et les particules MA modifiées ont été soumises à une analyse par spectroscopie infrarouge à transformée de Fourier. Le spectre correspondant aux particules de CE modifiée est représenté sur la figure 1, et celui qui correspond aux particules des TiO₂ modifiées est représenté sur la figure 2. Sur les deux figures, A en ordonnée représente l'absorbance, et F en abscisse représente la fréquente. Sur la figure 1, la courbe en pointillé correspond à CE avant modification et la courbe en trait plein correspond à CE après greffage. C=O désigne les raies des groupes C=O de COOH, et C=C désigne les raies du groupe C=C du groupe phényle. Sur la figure 2, la courbe en pointillé correspond à TiO₂ avant modification et la courbe en trait plein correspond à TiO₂ après greffage. COO désigne les raies des groupes chimisorbés, et C=C désigne les raies du groupe C=C du groupe phényle.

Sur la Ces spectres montrent que l'acide 4-amino-phényl acétique s'est effectivement greffé sur les particules de CE et de TiO₂.

### Préparation du matériau composite d'électrode

On a préparé un mélange 50/50 en poids de particules de MA modifiées et de particules de CE modifiées, on a introduit ce mélange dans de l'eau ultra pure et on a laissé sous agitation magnétique pendant 30 minutes. On a ajouté ensuite 5 fois la quantité stoechiométrique de chlorure de 4-(4,6-diméthoxy-1,3,5-triazin-2-yl)-4-méthylmorpholinium (DMTMM) qui se dissout instantanément, on a laissé réagir pendant 15 heures, puis on a récupéré le matériau solide de couleur grise et homogène par centrifugation et on l'a rincé 5 fois à l'eau ultra pure afin d'éliminer toute trace de DMTMM.

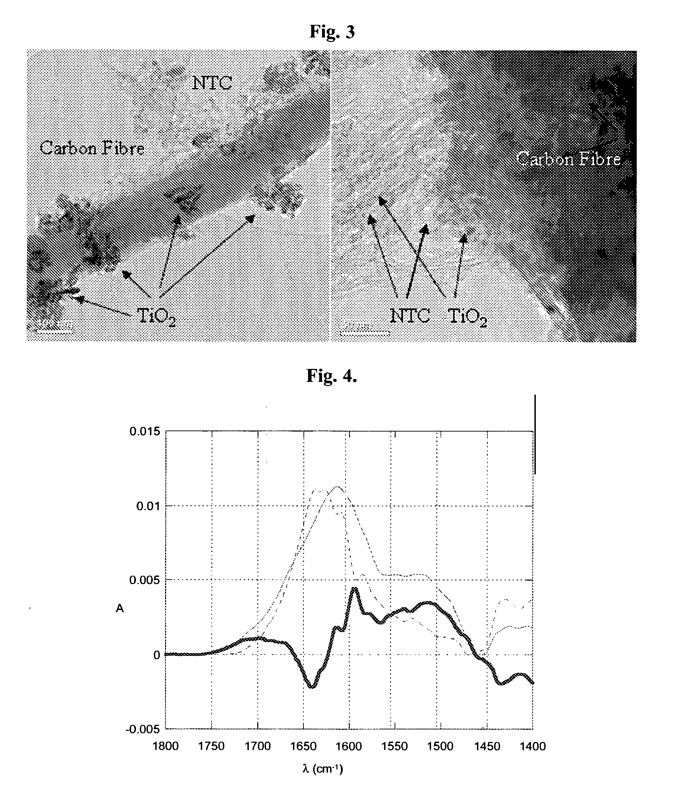

Le matériau ainsi obtenu a été soumis à une analyse par microscopie électronique de transmission (MET). Les images MET obtenues sont représentées sur la figure 3. La figure 3 montre que les particules de TiO₂ sont en contact intime à la fois avec les fibres de carbone et avec les nanotubes de carbone, ce qui prouve qu'il est possible d'auto assembler CE et MA.

Le spectre infrarouge du matériau composite est représenté sur la figure 4. La courbe en trait normal continu correspond au matériau final, la courbe en pointillé correspond au mélange TiO₂+carbone avant amidation, et la courbe en trait gras correspond à la courbe différentielle. Cette figure montre que la bande correspondant au groupe COOH (groupe L) a fortement diminué et que des bandes larges sont apparues dans la zone 1620-1500 cm⁻¹. Ces nouvelles bandes sont associées aux groupes amide (étirement du groupe CO, déformation du groupe NH) ce qui confirme la formation de groupes pontant amide assurant le connexion moléculaire entre les deux molécules greffées sur MA d'une part, et sur CE d'autre part.

## Revendications

1. Procédé de préparation d'une électrode composite comprenant un mélange de particules de matière active MA et de particules d'un matériau CE générant une conductivité électronique, ledit mélange étant supporté par un conducteur électrique formant un collecteur de courant CC, **caractérisé en ce qu'**il consiste à modifier les particules MA et les particules CE pour qu'elles puissent réagir entre elles et avec le matériau du collecteur pour former des liaisons covalentes, et de manière à former des liaisons électrostatiques d'une part entre lesdites particules et d'autre part entre lesdites particules et le collecteur de courant.

2. Procédé selon la revendication 1, **caractérisé en ce que** la matière active est choisie parmi les oxydes, les phosphates et les borates.

3. Procédé selon la revendication 1, **caractérisé en ce que** le matériau CE générant une conductivité électronique est un noir de carbone, un graphite, un nanotube de carbone ou de la fibre de carbone, ou un de leurs mélanges.

4. Procédé selon la revendication 1, **caractérisé en ce que** le collecteur de courant est un matériau métallique, choisi parmi l'acier inoxydable, l'aluminium, le cuivre, le nickel, ledit matériau métallique étant éventuellement modifié par une couche de carbone, de nitrure de métal de transition ou de polymère conducteur.

5. Procédé selon la revendication 1, dans lequel les particules de MA, les particules de CE et le collecteur de courant (globalement désignés ci-après par "substrats") sont modifiés à l'aide de réactifs (désignés ci-après de manière générale par T-X-L) qui permettent la formation d'une liaison covalente d'une part entre les particules et d'autre part entre les particules et le collecteur de courant, et à l'aide de réactifs, désignés de manière générale par T-X-Q, qui permettent de contrôler la charge, **caractérisé en ce que** :
- un groupe T est un groupe fonctionnel capable de réagir avec l'un des éléments MA, CE ou CC pour former une liaison covalente ;
- un groupe X est un groupe espaceur conjugué, c'est à dire un groupe qui comprend un système d'atomes liés par une liaison covalente avec au moins une liaison π délocalisée ;
- un groupe L est un groupe fonctionnel capable de réagir avec un autre groupe fonctionnel L pour former une liaison covalente ;
- un groupe Q est un groupe chargé, qui peut éventuellement être formé in situ.

6. Procédé selon la revendication 5, **caractérisé en ce que** le groupe espaceur X est un groupe divalent constitué par au moins un groupe choisi parmi les groupes phénylène, oligophénylène, oligophénylènevinylène, oligophénylène éthynylène, oligothiophène, et azo benzène.

7. Procédé selon la revendication 5, **caractérisé en ce que** le groupe T est :
- un groupe PO₃H₂, COOH ou SO₃H et le substrat à modifier est un oxyde, un phosphate ou un borate ;
- un cation diazonium, lorsque le substrat à modifier est du carbone formant le matériau CE, ou une matière active MA sous forme de particules au moins partiellement enrobées par du carbone, ou un matériau métallique.

8. Procédé selon la revendication 5, **caractérisé en ce que** l'un des réactifs comprend un groupe azido et un autre réactif comprend un groupe acétylène.

9. Procédé selon la revendication 5, **caractérisé en ce que** l'un des réactifs comprend un groupe amine et un autre réactif comprend un groupe COOH.

10. Procédé selon la revendication 5, **caractérisé en ce que** le groupe Q portant une charge négative ou un charge positive.

11. Procédé selon la revendication 10, **caractérisé en ce que** le groupe Q est un groupe à charge négative choisi parmi COO⁻, HPO₃⁻, PO₃²⁻ et SO₃⁻, ou un groupe à charge positive NH₃⁺.

12. Procédé selon la revendication 5, **caractérisé en ce que** le réactif est choisi parmi les composés répondant aux formules suivantes :

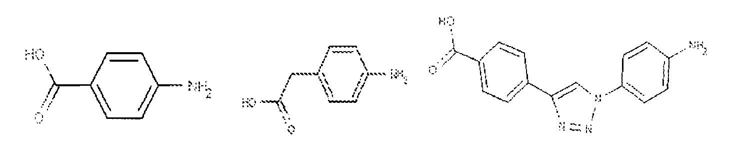

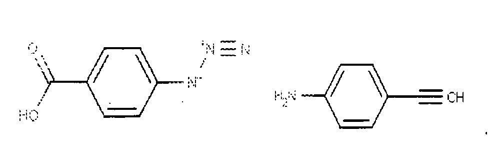

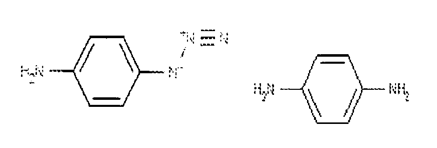

13. Procédé selon la revendication 1, **caractérisé en ce qu'**il comprend les étapes suivantes :
a) modification des particules de MA à l'aide d'au moins un réactif T1-X1-L1 et d'un réactif T1'-X1'-Q1 ;
b) modification des particules de CE à l'aide d'au moins un réactif T2-X2-L2 et d'un réactif T2'-X2'-Q2 ;
c) modification du collecteur de courant à l'aide de réactifs T3-X3-L3 et T3'-X3'-Q3
d) mélange des particules MA modifiées et des particules CE modifiées et mise en contact avec le collecteur de courant modifié ;
e) application des conditions permettant la réaction entre les divers groupes L ; étant entendu que les groupes L1, L2 et L3 sont choisis de sorte à pouvoir réagir entre eux.

14. Procédé selon la revendication 13, **caractérisé en ce que** l'étape e) est effectuée en une ou plusieurs étapes, avant ou après la mise en contact du mélange de particules MA modifiées et de particules de CE modifiées avec le collecteur de courant.

15. Procédé selon la revendication 14, **caractérisé en ce qu'**il est mis en oeuvre en introduisant dans un milieu liquide support le collecteur de courant modifié selon l'étape c), les particules de MA modifiées selon l'étape a), les particules de CE modifiées selon l'étape b), puis en appliquant les conditions requises pour la réaction entre les différents groupes L1, L2 et L3.

16. Procédé selon la revendication 14, caractérisé en que qu'on prépare un mélange de particules de MA modifiées et de particules de CE modifiées, on prépare un collecteur de courant modifié, on dépose le mélange de particules modifiées sur le collecteur de courant modifié, puis on applique, comme dans le premier mode opératoire, les conditions requises pour la réaction entre les différents groupes L1, L2 et L3.

17. Procédé selon la revendication 15, **caractérisé en ce que** :
- on prépare un collecteur de courant modifié portant des groupes L3 ;
- on prépare des particules modifiées MA portant un groupe L 1 ;
- on prépare des particules modifiées CE portant des groupes L2 et L2' capables de réagir entre eux et dont l'un peut réagir avec L1;
- on mélange les particules modifiées et on applique les conditions requises pour la réaction entre les différents groupes L1, L2 et L2' ;
- on dépose le matériau résultant de la réaction entre les différents groupes L1, L2 et L2' sur le collecteur de courant modifié et on applique les conditions permettant la réaction des groupes L3 avec les groupes L1, L2 et L2' restés libres.

## Patentansprüche

1. Verfahren zur Herstellung einer Verbundelektrode, die ein Gemisch aus Partikeln aktiven MA-Materials und aus Partikeln eines CE-Materials umfasst, das eine elektronische Konduktivität erzeugt, wobei das Gemisch von einem elektronischen Leiter getragen wird, der einen Stromkollektor CC bildet, **dadurch gekennzeichnet, dass** es darin besteht, die MA-Partikel und die CE-Partikel zu modifizieren, damit sie miteinander reagieren können und mit dem Material des Abnehmers, um kovalente Bindungen zu bilden, und derart, um einerseits elektrostatische Bindungen zwischen den Partikeln und andererseits zwischen den Partikeln und dem Stromkollektor zu bilden.

2. Verfahren nach Anspruch 1, **dadurch gekennzeichnet, dass** das aktive Material aus den Oxiden, den Phosphaten und den Boraten ausgewählt ist.

3. Verfahren nach Anspruch 1, **dadurch gekennzeichnet, dass** das CE-Material, das eine elektronische Konduktivität erzeugt, ein Ruß, ein Graphit, ein Carbon-Nanoröhrchen oder Carbonfaser oder eines ihrer Gemische ist.

4. Verfahren nach Anspruch 1, **dadurch gekennzeichnet, dass** der Stromkollektor ein metallisches Material ist, das aus dem nichtrostenden Stahl, dem Aluminium, dem Kupfer, dem Nickel ausgewählt ist, wobei das metallische Material eventuell durch eine Carbon-, eine Übergangsmetall-Nitrid- oder eine Schicht aus leitendem Polymer modifiziert ist.

5. Verfahren nach Anspruch 1, wobei die MA-Partikel, die CE-Partikel und der Stromkollektor (nachfolgend allgemein als "Substrate" bezeichnet) mit Hilfe von Reagenzien modifiziert sind (nachfolgend allgemein mit T-X-L bezeichnet), die die Bildung einer kovalenten Bindung einerseits zwischen den Partikeln und andererseits zwischen den Partikeln und dem Stromkollektor erlauben und mit Hilfe von Reagenzien, die allgemein mit T-X-Q bezeichnet werden, die erlauben, die Ladung zu kontrollieren, **dadurch gekennzeichnet, dass**:
- eine T-Gruppe eine Funktionsgruppe ist, die imstande ist, mit einem der Elemente MA, CE oder CC zu reagieren, um eine kovalente Bindung zu bilden,
- eine X-Gruppe eine konjugierte Spacer-Gruppe ist, das heißt eine Gruppe, die ein System von Atomen umfasst, die durch eine kovalente Bindung mit mindestens einer delokalisierten n-Bindung verbunden sind,
- eine L-Gruppe eine Funktionsgruppe ist, die imstande ist, mit einer anderen L-Funktionsgruppe zu reagieren, um eine kovalente Bindung zu bilden,
- eine Q-Gruppe eine geladene Gruppe ist, die eventuell in situ gebildet werden kann.

6. Verfahren nach Anspruch 5, **dadurch gekennzeichnet, dass** die Spacer-Gruppe X eine zweiwertige Gruppe ist, die von mindestens einer Gruppe gebildet wird, die aus den Phenylen-, Oligophenylen-, Oligophenylenvinylen-, Oligophenylen-Ethynylen-, Oligothiophen- und Azobenzolgruppen ausgewählt sind.

7. Verfahren nach Anspruch 5, **dadurch gekennzeichnet, dass** die T-Gruppe ist:
- eine PO₃H₂-, COOH- oder SO₃H-Gruppe und das zu modifizierende Substrat ein Oxid, ein Phosphat oder ein Borat,
- ein Diazonium-Kation, wenn das zu modifizierende Substrat Carbon ist, das das CE-Material bildet, oder ein aktives MA-Material in Form von Partikeln, die mindestens teilweise mit Carbon umhüllt sind, oder ein metallisches Material.

8. Verfahren nach Anspruch 5, **dadurch gekennzeichnet, dass** eines der Reagenzien eine Azidogruppe umfasst und ein anderes Reagenz eine Acetylengruppe umfasst.

9. Verfahren nach Anspruch 5, **dadurch gekennzeichnet, dass** eines der Reagenzien eine Amingruppe umfasst und ein anderes Reagenz eine COOH-Gruppe umfasst.

10. Verfahren nach Anspruch 5, **dadurch gekennzeichnet, dass** die Q-Gruppe eine negative Ladung oder eine positive Ladung trägt.

11. Verfahren nach Anspruch 10, **dadurch gekennzeichnet, dass** die Q-Gruppe eine Gruppe mit negativer Ladung ist, ausgewählt aus COO⁻, HPO₃⁻, PO₃²⁻ und SO₃⁻, oder eine Gruppe mit positiver Ladung NH₃⁺.

12. Verfahren nach Anspruch 5, **dadurch gekennzeichnet, dass** das Reagenz aus den Verbindungen ausgewählt ist, die den folgenden Formeln entsprechen:

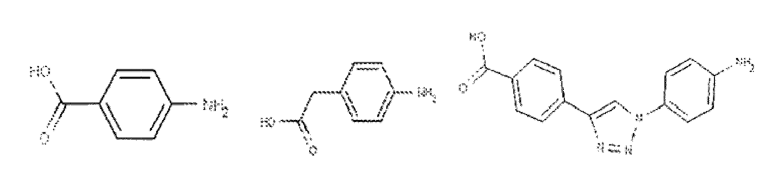

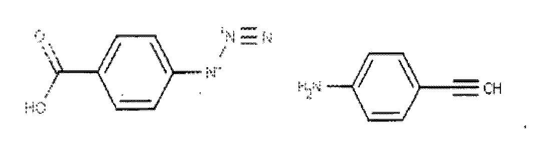

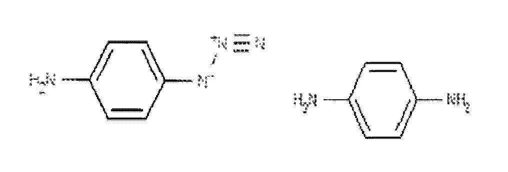

13. Verfahren nach Anspruch 1, **dadurch gekennzeichnet, dass** es die folgenden Schritte umfasst:
a) Modifizierung der MA-Partikel mit Hilfe von mindestens einem Reagenz T1-X1-L1 und einem Reagenz T1'-X1'-Q1,
b) Modifizierung der CE-Partikel mit Hilfe von mindestens einem Reagenz T2-X2-L2 und einem Reagenz T2'-X2'-Q2,
c) Modifizierung des Stromkollektors mit Hilfe von Reagenzien T3-X3-L3 und T3'-X3'-Q3,
d) Mischen der modifizierten MA-Partikel und der modifizierten CE-Partikel und Inkontaktbringen mit den modifizierten Stromkollektor,
e) Anwenden der Bedingungen, die die Reaktion zwischen den diversen L-Gruppen erlauben,
wobei es sich versteht, dass die Gruppen L1, L2 und L3 derart ausgewählt sind, dass sie miteinander reagieren können.

14. Verfahren nach Anspruch 13, **dadurch gekennzeichnet, dass** der Schritt e) in einem oder mehreren Schritten vor der nach dem Inkontaktbringen des Gemischs aus modifizierten MA-Partikeln und modifizierten CE-Partikeln mit dem Stromkollektor durchgeführt wird.

15. Verfahren nach Anspruch 14, **dadurch gekennzeichnet, dass** es durch Einführen des gemäß Schritt c) modifizierten Stromkollektors, der gemäß Schritt a) modifizierten MA-Partikel, der gemäß Schritt b) modifizierten CE-Partikel in ein flüssiges Trägermilieu und danach Anwendung der für die Reaktion zwischen den verschiedenen Gruppen L1, L2 und L3 erforderlichen Bedingungen durchgeführt wird.

16. Verfahren nach Anspruch 14, **dadurch gekennzeichnet, dass** ein Gemisch aus modifizierten MA-Partikeln und aus modifizierten CE-Partikeln hergestellt wird, dass ein modifizierter Stromkollektor hergestellt wird, dass das Gemisch modifizierter Partikel auf dem modifizierten Stromkollektor aufgebracht wird und dass dann wie bei der ersten Vorgehensweise die für die Reaktion zwischen den verschiedenen Gruppen L1, L2 und L3 erforderlichen Bedingungen angewendet werden.

17. Verfahren nach Anspruch 15, **dadurch gekennzeichnet, dass**:
- ein modifizierter Stromkollektor hergestellt wird, der L3-Gruppen trägt,
- modifizierte MA-Partikel hergestellt werden, die eine Gruppe L1 tragen,
- modifizierte CE-Partikel hergestellt werden, die Gruppen L2 und L2' tragen, die imstande sind, miteinander zu reagieren und von denen eine mit L1 reagieren kann,
- die modifizierten Partikel gemischt werden und die Bedingungen angewendet werden, die für die Reaktion zwischen den verschiedenen Gruppen L1, L2 und L2' erforderlich sind,
- das Material, das bei der Reaktion zwischen den verschiedenen Gruppen L1, L2 und L2' entsteht, auf den modifizierten Stromkollektor aufgebracht wird und die Bedingungen angewendet werden, die die Reaktion der L3-Gruppen mit den Gruppen L1, L2 und L2' erlauben, die frei geblieben sind.

## Claims

1. A process for preparing a composite electrode comprising a mixture of particles of active material AM and particles of an EC material generating an electronic conductivity, said mixture being supported by an electrical conductor forming a current collector CC, **characterized in that** it consists in modifying the AM particles and the EC particles so that they can react with one another and with the material of the collector in order to form covalent bonds, and so as to form electrostatic bonds on the one hand between said particles and on the other hand between said particles and the current collector.

2. The process as claimed in claim 1, **characterized in that** the active material is chosen from oxides, phosphates and borates.

3. The process as claimed in claim 1, **characterized in that** the EC material generating an electronic conductivity is a carbon black, a graphite, a carbon nanotube or carbon fiber, or a mixture thereof.

4. The process as claimed in claim 1, **characterized in that** the current collector is a metallic material chosen from stainless steel, aluminum, copper, nickel, said metallic material optionally being modified by a layer of carbon, of transition metal nitride or of conductive polymer.

5. The process as claimed in claim 1, in which the AM particles, the EC particles and the current collector (globally donated hereinbelow by the term "substrates") are modified using reactants (denoted hereinbelow generally by T-X-L) which enable the formation of a covalent bond on the one hand between the particles and on the other hand between the particles and the current collector, and using reactants, denoted generally by T-X-Q, which make it possible to control the charge, **characterized in that**:
- a T group is a functional group capable of reacting with one of the AM, EC or CC elements in order to form a covalent bond;
- an X group is a conjugated spacer group, that is to say a group which comprises a system of atoms bonded by a covalent bond with at least one delocalized π bond;
- an L group is a functional group capable of reacting with another L functional group in order to form a covalent bond; and
- a Q group is a charged group, which may optionally be formed *in situ.*

6. The process as claimed in claim 5, **characterized in that** the X spacer group is a divalent group consisting of at least one group chosen from phenylene, oligophenylene, oligophenylenevinylene, oligophenyleneethynylene, oligothiophene and azobenzene groups.

7. The process as claimed in claim 5, **characterized in that** the T group is:
- a PO₃H₂, COOH or SO₃H group and the substrate to be modified is an oxide, a phosphate or a borate; and
- a diazonium cation, when the substrate to be modified is carbon forming the EC material, or an active material AM in the form of particles that are at least partially coated with carbon, or a metallic material.

8. The process as claimed in claim 5, **characterized in that** one of the reactants comprises an azido group and another reactant comprises an acetylene group.

9. The process as claimed in claim 5, **characterized in that** one of the reactants comprises an amine group and another reactant comprises a COOH group.

10. The process as claimed in claim 5, **characterized in that** the Q group bears a negative charge or a positive charge.

11. The process as claimed in claim 10, **characterized in that** the Q group is a negatively-charged group chosen from COO⁻, HPO₃⁻, PO₃²⁻ and SO₃⁻, or a positively-charged group NH₃⁺.

12. The process as claimed in claim 5, **characterized in that** the reactant is chosen from the compounds corresponding to the following formulae:

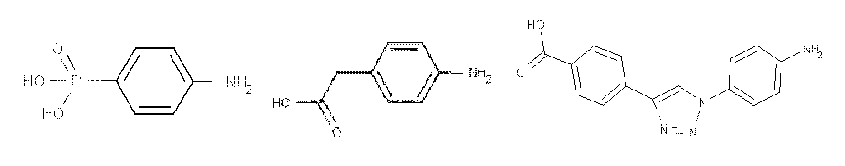

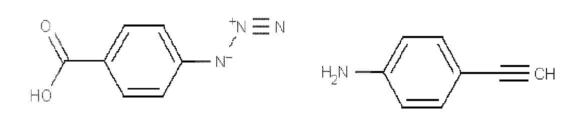

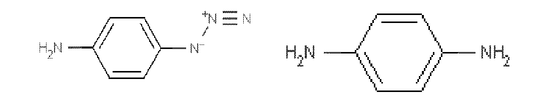

13. The process as claimed in claim 1, **characterized in that** it comprises the following steps:
a) modifying the AM particles using at least one T1-X1-L1 reactant and a T1'-X1'-Q1 reactant;
b) modifying the EC particles using at least one T2-X2-L2 reactant and a T2'-X2'-Q2 reactant;
c) modifying the current collector using T3-X3-L3 and T3'-X3'-Q3 reactants;
d) mixing the modified AM particles and the modified EC particles and bringing into contact with the modified current collector;
e) applying conditions that make the reaction between the various L groups possible;
it being understood that the L1, L2 and L3 groups are chosen so as to be able to react with one another.

14. The process as claimed in claim 13, **characterized in that** step e) is carried out in one or more steps, before or after bringing the mixture of modified AM particles and of modified EC particles into contact with the current collector.

15. The process as claimed in claim 14, **characterized in that** it is carried out by introducing into a liquid support medium the current collector modified according to step c), the AM particles modified according to step a), the EC particles modified according to step b), then by applying the conditions required for the reaction between the various L1, L2 and L3 groups.

16. The process as claimed in claim 14, **characterized in that** a mixture of modified AM particles and of modified EC particles is prepared, a modified current collector is prepared, the mixture of modified particles is deposited on the modified current collector, then, as in the first procedure, the conditions required for the reaction between the various L1, L2 and L3 groups are applied.

17. The process as claimed in claim 15, **characterized in that**:
- a modified current collector is prepared that bears L3 groups;
- modified AM particles are prepared that bear an L1 group;
- modified EC particles are prepared that bear L2 and L2' groups capable of reacting with one another and one of which can react with L1;
- the modified particles are mixed and the conditions required for the reaction between the various L1, L2 and L2' groups are applied;
- the material resulting from the reaction between the various L1, L2 and L2' groups is deposited on the modified current collector and the conditions that enable the reaction of the L3 groups with the L1, L2 and L2' groups that have remained free are applied.
